# FASCICULE DE BREVET EUROPEEN

(11) **EP 2 577 913 B1**
(45) Date de publication et mention de la délivrance du brevet: **22.07.2015**
(21) Numéro de dépôt: 10724406.3
(22) Date de dépôt: 28.05.2010
(51) Int. Cl.: H04L 29/06, H04L 12/28

(54) **DISPOSITIF ET PROCÉDÉ D'INTERFAÇAGE D'AU MOINS UN TERMINAL DE STOCKAGE ET DE TRANSMISSION DE DONNÉES AVEC AU MOINS UN SUPPORT DE TRANSMISSION DE DONNÉES**
VORRICHTUNG UND VERFAHREN ZUR KOPPLUNG VON MINDESTENS EINEM DATENSPEICHER- UND ÜBERTRAGUNGSENDGERÄT MIT MINDESTENS EINEM DATENÜEBRTRAGUNGSMEDIUM
DEVICE AND METHOD FOR INTERFACING AT LEAST ONE DATA STORAGE AND TRANSMISSION TERMINAL WITH AT LEAST ONE DATA TRANSMISSION MEDIUM

(43) Date de publication de la demande: 10.04.2013
(73) Titulaire: Sas Taztag, 35170 Bruz (FR)
(72) Inventeur: FOUCHARD, Eric, F-35170 Bruz (FR)
(74) Mandataire: Vidon Brevets & Stratégie
(86) Numéro de dépôt international: PCT/EP2010/057460
(87) Numéro de publication internationale: WO 2010/136582

(56) Documents cités:
- WO-A2-2009/001259
- US-A1- 2007 054 616
- ANONYMOUS: "Near Field Communication (NFC)" ECMA INTERNATIONAL STANDARDIZING INFORMATION AND COMMUNICATION SYSTEMS, [Online] octobre 2002 (2002-10), XP002566299 Internet (www.google.com) Extrait de l'Internet: URL:http://www.ecma-international.org/acti vities/Communications/2002tg19-010.pdf> [extrait le 2010-01-28]

## Description

### 1. domaine de l'invention

Le domaine de l'invention est celui de la communication entre un terminal apte à recevoir, stocker, traiter et émettre des données et un environnement extérieur.

Plus précisément, l'invention concerne la mise en relation sécurisée de terminaux prévus pour communiquer dans un périmètre de dimensions réduites, jusqu'à quelques centaines de mètres, via des techniques de transmission en champ proche (NFC) et par radiofréquence, par exemple selon la technologie ZigBee ® ou Wifi, notamment pour fournir à ces terminaux des séquences de données dédiées, ou tags, qui peuvent par exemple être des informations commerciales.

### 2. art antérieur

De tels terminaux, décrits notamment dans les demandes de brevet FR-0804751 et WO 2009/001259, comprennent d'une part des moyens de communication en champ proche, permettant d'initialiser un échange de données avec un autre terminal ou un serveur, lorsque les deux éléments sont amenés à proximité l'un de l'autre (typiquement quelques centimètres), et d'autre part des moyens de communication radiofréquence, permettant de poursuivre l'échange de données préalablement initialisée, en tolérant un éloignement des deux éléments.

Ainsi, ces terminaux, appelés par la suite terminaux de stockage et de transmission de données, ou plus généralement terminaux, permettent de sécuriser l'initialisation d'un échange de données, en imposant une très grande proximité (et en empêchant par exemple un tiers mal intentionné d'intercepter les informations échangées). L'échange peut ensuite se poursuivre à plus grande distance, la confidentialité pouvant rester assurée par l'usage de clés, de codes, d'informations cryptées et/ou la transmission d'une portion des données utiles lors de l'initialisation.

De tels terminaux peuvent être équipés de moyens de reconnaissance biométrique, de façon à permettre une identification sûre et ne nécessitant aucune action particulière, telle que la fourniture d'un code d'identification.

Ces terminaux répondent donc à un double besoin de sécurité (identification, authentification et/ou cryptage) et de simplicité (ergonomie, encombrement, coût,...).

Il est donc souhaitable d'étendre leurs champs d'applications autant que faire se peut, notamment par la fourniture optimisée et facilitée de tags.

### 3. résumé de l'invention

Dans ce but, l'invention a notamment pour objet un dispositif d'interfaçage sécurisé, permettant le stockage d'au moins une séquence de données dédiées, dite tag, et/ou son transfert à au moins un terminal de stockage et de transmission de données, ledit tag comprenant d'une part des données de paramétrage et d'autre part des données informatives Selon l'invention, un tel dispositif comprend :
- des moyens d'obtention d'au moins un flux de données multimédia diffusées via un ou plusieurs supports de transmission ;
- des moyens de détection et d'extraction d'au moins un desdits tags et/ou d'au moins une information permettant de télécharger au moins un tag, dans ledit flux de données ;
- des moyens de gestion et/ou de stockage du ou desdits tags ;
- des moyens d'identification et/ou d'authentification d'un desdits terminaux, mettant en oeuvre des moyens de communication en champ proche ;
- des moyens de réception d'une requête de transmission d'au moins un tag, émise par un desdits terminaux ;
- des premiers moyens de transmission radiofréquence dudit au moins un tag vers ledit terminal.

Ainsi, le dispositif d'interfaçage de l'invention assure une fonction de serveur de tags. Il est apte à extraire des tags dans des signaux, ou des flux, diffusés et/ou téléchargés, et à les transmettre sur requête à un terminal, après que celui-ci se soit identifié auprès du dispositif d'interfaçage.

Cette identification (ou authentification, selon les protocoles), se fait via une liaison NFC, qui impose une grande proximité entre le dispositif d'interfaçage et le terminal (quelques centimètres) et donc une sécurisation de l'échange des données. Ensuite, l'échange de données, pour les requêtes et le téléchargement des tags se fait à plus grande distance, via une liaison radiofréquence.

Ainsi, le dispositif d'interfaçage de l'invention est apte à communiquer avec les terminaux d'une part en champ proche, notamment pour une initialisation d'un échange de données, et en radiofréquence. Il est par ailleurs capable de recevoir, ou obtenir, via un support de transmission de données, ou canal, (qui peut par exemple être une connexion au réseau Internet), un flux de données (notamment un flux vidéo ou multimédia ou un signal de télévision) et à obtenir, en fonction de ce flux, au moins un tag, c'est à dire une étiquette électronique étiquetant une partie des données, destiné à un ou plusieurs terminaux.

Selon les modes de réalisation, un tag peut être extrait de façon directe du flux de données, le tag étant inséré dans le flux, et/ou de façon indirecte, un ensemble d'au moins un tag étant téléchargé depuis un site distant en fonction d'une information extraite du flux.

Comme cela apparaîtra plus clairement par la suite, le dispositif d'interfaçage peut ainsi, par exemple, extraire de tels tags d'un champ prévu à cet effet dans un flux vidéo, suite à l'interrogation d'un serveur distant (via le cas échéant une passerelle domestique connectée à Internet), ou encore dans des signaux de télévision diffusés.

Ainsi, dans certains modes de réalisation de l'invention, lesdits moyens d'obtention comprennent des moyens de téléchargement dudit flux de données, depuis au moins un serveur distant.

Par exemple, le flux peut être téléchargé sur Internet, ou obtenu en « streaming » sur Internet. Il peut notamment s'agir de la rediffusion d'une émission de télévision, accessible depuis un site Internet.

Dans d'autres modes de réalisation, le flux de données est un signal diffusé. Dans ce cas, le dispositif d'interfaçage extrait ces tags, en analysant le flux reçu, et les transmet au (ou les met à disposition du) terminal.

Il peut notamment s'agir d'un signal de télévision, comprenant des données formant les tags (ou des données permettant d'y accéder). Dans ce cas notamment, le dispositif d'interfaçage peut être incorporé à un téléviseur.

Selon les modes de réalisation, il peut par exemple s'agir de tags relatifs à un sondage, de tags publicitaires (coupons de réduction notamment), et plus généralement d'informations intéressant le porteur du terminal (actualités, jeux, personnes ayant le même profil,...). Ceci est aisé à mettre en oeuvre, du fait que lors d'une initialisation en NFC, le terminal peut transmettre de façon sécurisée des données d'identification et/ou des données personnelles au dispositif d'interfaçage, qui peut ensuite lui-même gérer la sécurité et la confidentialité avec un serveur.

Selon un autre aspect, le dispositif peut assurer une fonction de serveur de tags, pour un ou plusieurs terminaux.

Selon un mode de réalisation particulier de l'invention , lesdites données de paramétrage comprennent des données d'horodatage, définissant un instant de début et/ou un instant de fin de validité et/ou une durée de validité, et lesdits moyens de gestion et/ou de stockage de tags contrôlent le stockage et/ou le transfert desdits tags vers au moins un terminal en fonction desdites données d'horodatage.

Ainsi, le dispositif d'interfaçage peut gérer les tags qu'il extrait et les stocker en fonction des informations d'horodatage, par exemple ne pas les fournir avant une certaine horodate ou les supprimer lorsqu'ils ne sont plus valables.

Selon un autre mode de réalisation particulier de l'invention, qui peut éventuellement être combiné avec le mode de réalisation ci-dessus, lesdites données de paramétrage comprennent des données de caractérisation desdites données informatives, et lesdits moyens de gestion et/ou de stockage de tags contrôlent le stockage et/ou le transfert desdits tags vers au moins un terminal en fonction d'une comparaison entre lesdites données de caractérisation et des informations de configuration stockées dans ledit dispositif d'interfaçage et/ou fournies par un desdits terminaux.

La gestion peut ainsi tenir compte d'autres paramètres, fournis par le terminal, et notamment d'informations sur le détenteur de ce terminal (âge, sexe, adresse géographique, statut marital, préférences saisies ou déterminées par le terminal, ...).

Il est ainsi possible de gérer des préférences ou des paramètres, pour sélectionner les tags stockés et/ou proposés aux terminaux, en fonction des souhaits des utilisateurs et des informations fournies par ceux-ci.

Dans le cas où plusieurs terminaux sont connectés au dispositif d'interfaçage, la gestion peut bien sûr être personnalisée, en fonction des préférences définies par chaque terminal.

Selon un mode de réalisation particulier de l'invention, le dispositif d'interfaçage peut comprendre des moyens de gestion de transfert d'au moins un tag vers un terminal, comprenant des moyens de proposition de transfert d'au moins un tag, des moyens de requête de transfert d'au moins un tag et des moyens de transfert dudit tag.

Notamment, le dispositif d'interfaçage peut proposer à un terminal une liste de tags susceptibles de l'intéresser. L'utilisateur peut ainsi choisir, via son terminal, les tags qu'il souhaite recevoir, parmi ceux proposés.

Selon un mode de réalisation particulier de l'invention, le dispositif d'interfaçage comprend des moyens de réception d'une réponse à un tag, transmise par un desdits terminaux, et des moyens de transmission de ladite réponse vers un serveur distant.

Il peut par exemple s'agir de réponse à un sondage, de commandes particulières, ou d'un choix d'un utilisateur du terminal dans le cadre d'un programme télévisé interactif. Le terminal, via le dispositif, peut réagir à une sollicitation (objet d'un tag) par exemple. On dispose ainsi d'échanges interactifs.

Selon une caractéristique particulière de l'invention, le dispositif d'interfaçage comprend des seconds moyens de transmission radiofréquence avec une passerelle de connexion à un réseau téléphonique et/ou Internet.

Dans ce cas, il n'est pas dépendant d'une connexion filaire, mais intègre trois moyens de réception et d'émission, selon trois protocoles distincts, par exemple NFC et ZigBee® pour les échanges avec les terminaux, et Wifi pour les échanges avec la passerelle.

Selon une caractéristique particulière de l'invention, le dispositif d'interfaçage comprend des moyens de certification et/ou d'authentification de ladite réponse, en fonction d'au moins une information de certification et/ou d'authentification transmise par ladite requête de transmission.

Ces informations de certification et/ou d'authentification sont échangées par les moyens de communication en champ proche. Elles permettent, de façon simple, d'authentifier un utilisateur par son terminal, dans le dispositif d'interfaçage puis, via ce dernier, dans un serveur distant.

L'authentification ou l'identification, du côté du terminal, peut être effectuée de façon simple, par des moyens biométriques tel qu'une lecture d'empreinte digitale par exemple.

Ainsi, par exemple dans le cas d'un vote, un degré important de sécurité est assuré. On peut notamment contrôler qu'un utilisateur ne vote pas plusieurs fois, ou suivre au contraire l'évolution de son opinion, s'il est prévu qu'il peut, ou doit, voter plusieurs fois.

Selon un mode de réalisation particulier de l'invention, ladite information permettant le téléchargement dudit tag comprend au moins une information de synchronisation définissant un instant de début et/ou un instant de fin de validité, une durée de validité et/ou une donnée de synchronisation avec ledit tag à télécharger, et le dispositif comprend des moyens de contrôle du téléchargement dudit tag, en fonction de la ou desdites informations de synchronisation.

Ainsi, il est possible de mettre en oeuvre une synchronisation pour le téléchargement des tags . Cette synchronisation peut être absolue (une période est définie, par exemple pour un vote ou un sondage, notamment un sondage en temps réel, ou en fonction des dates de début et de fin de la souscription d'un contrat publicitaire entre une entreprise et une chaîne de télévision) ou relative (en fonction par exemple de l'instant de visualisation d'un film, d'un « timecode » particulier, ou d'une séquence d'un film, qui a été chargé en VOD (vidéo à la demande), pour l'accès à une promotion fonction de la séquence visualisée).

Il est important de noter que, dans ce cas, la mise à disposition des tags peut être fonction d'une part de l'utilisateur (paramètres (âge, sexe, préférences,...) fournis par celui-ci lors de l'initialisation, en NFC, par exemple) et d'autre part des informations de synchronisation.

Selon une caractéristique particulière de l'invention, le dispositif d'interfaçage de l'invention peut par ailleurs comprendre des seconds moyens de transmission radiofréquence avec une passerelle de connexion à un réseau téléphonique et/ou Internet.

Dans ce cas, il n'est pas dépendant d'une connexion filaire, mais intègre trois moyens de réception et d'émission, selon trois protocoles distincts, par exemple NFC et ZigBee® pour les échanges avec les terminaux, et Wifi pour les échanges avec la passerelle.

Selon une caractéristique particulière de l'invention, le dispositif d'interfaçage peut comprendre des moyens de paramétrage, de codage et/ou de cryptage en fonction de données de paramétrage, de codage et/ou de cryptage échangées via lesdits moyens de communication en champ proche.

Ainsi, les échanges peuvent être d'une part sécurisés, et d'autre part personnalisés. Dans un mode de réalisation particulier, lesdits moyens d'obtention du dispositif de l'invention comprennent des moyens d'ouverture et de mise en oeuvre d'un canal de transmission de données entre un terminal et au moins un support de transmission de données, via ladite passerelle de connexion.

Ainsi, sans ordinateur, il est possible d'échanger des données avec un serveur. Ceci peut par exemple permettre de participer à des sondages, à des jeux interactifs, d'influer sur un programme télévisé...

Ces moyens d'ouverture et de mise en oeuvre d'un canal de transmission de données peuvent comprendre des moyens de conversion de signaux entre lesdits premiers moyens de transmission radiofréquence (transmission entre le dispositif et le terminal) et les seconds moyens de transmission radiofréquence (transmission entre le dispositif et la passerelle).

Selon une caractéristique particulière de l'invention, lesdits premiers moyens de transmission radiofréquence et/ou lesdits seconds moyens de transmission radiofréquence appartiennent au groupe comprenant des moyens de communication mettant en oeuvre un protocole de type ZigBee®, Bluetooth®, 6LoWPAN®, Ethernet® ou Wifi.

L'invention concerne également un procédé d'interfaçage sécurisé, permettant le stockage d'au moins une séquence de données dédiées, dite tag, et/ou son transfert à au moins un terminal de stockage et de transmission de données, ledit tag comprenant d'une part des données de paramétrage et d'autre part des données informatives.

Un tel procédé comprend notamment :
- une étape d'obtention d'au moins un flux de données multimédia diffusées via un ou plusieurs supports de transmission ;
- une étape de détection et d'extraction d'au moins un desdits tags et/ou d'au moins une information permettant de télécharger au moins un tag, dans ledit flux de données ;
- une étape de gestion et/ou de stockage du ou desdits tags ;
- une étape d'identification et/ou d'authentification d'un desdits terminaux, mettant en oeuvre des moyens de communication en champ proche ;
- une étape de réception d'une requête de transmission d'au moins un tag, émise par un desdits terminaux ;
- une étape de transmission radiofréquence dudit au moins un tag vers ledit terminal.

Le procédé peut également comprendre, notamment, une étape d'échange de données avec une passerelle de connexion à un réseau téléphonique et/ou Internet, mettant en oeuvre des seconds moyens de transmission radiofréquence.

Selon une application particulière de l'invention, les données transmises par un terminal, via un dispositif d'interfaçage, peuvent permettre d'effectuer des votes, ou de participer à des sondages. Notamment, il est possible de voter en temps réel, ou à tout le moins de façon synchronisée, en fonction de tags reçus par le terminal. On peut ainsi mettre en oeuvre, dans un serveur, un suivi précis des votes et de leur évolution, et suivre, par exemple en temps réel, l'évolution des réponses à une question, et le cas échéant restituer une information évoluant dans le temps.

Ceci peut par exemple permettre de suivre, lors d'un débat politique, l'évolution de la cote de chaque intervenant, l'utilisateur étant invité à se prononcer régulièrement, par l'intermédiaire d'un tag horodaté. La validité, et le cas échéant l'unicité, de la réponse peuvent être contrôlées d'une part à l'aide de l'horodatage, et d'autre part à l'aide de l'identifiant de l'utilisateur. Selon les cas, on peut prévoir qu'une inscription préalable est nécessaire pour que les votes (ou les tags) soient pris en compte.

Une approche similaire peut être mise en oeuvre pour suivre les audiences des chaînes de télévision, l'impact d'une campagne publicitaire, ou pour proposer des paris en ligne.

### 4. liste des figures

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés, parmi lesquels :
- la figure 1 présente une mise en oeuvre de l'invention dans un contexte de diffusion audiovisuelle domestique ;
- les figures 2A et 2B illustrent la structure et la hiérarchisation des moyens d'un dispositif selon un mode de réalisation de l'invention ;
- la figure 3 représente les éléments constitutifs d'un tag ;
- la figure 4 illustre la structure des moyens de gestion de tag.

### 5. description d'un mode de réalisation

L'invention concerne un dispositif d'interfaçage apte à communiquer avec des terminaux (par exemple du type décrit dans le document FR-0804751 déjà mentionné) d'une part en champ proche, et d'autre part en radiofréquence.

Selon l'invention, un tel dispositif d'interfaçage est notamment adapté pour extraire une séquence de données (tags) destinée à un ou plusieurs terminaux d'un flux de données reçu ou obtenu, via un canal, ou un support de transmission de données, qui peut être relié à un serveur distant ou encore à un système de vidéo à la demande ou à un récepteur de signaux de télévision, pour la stocker et/ou la transmettre à des terminaux.

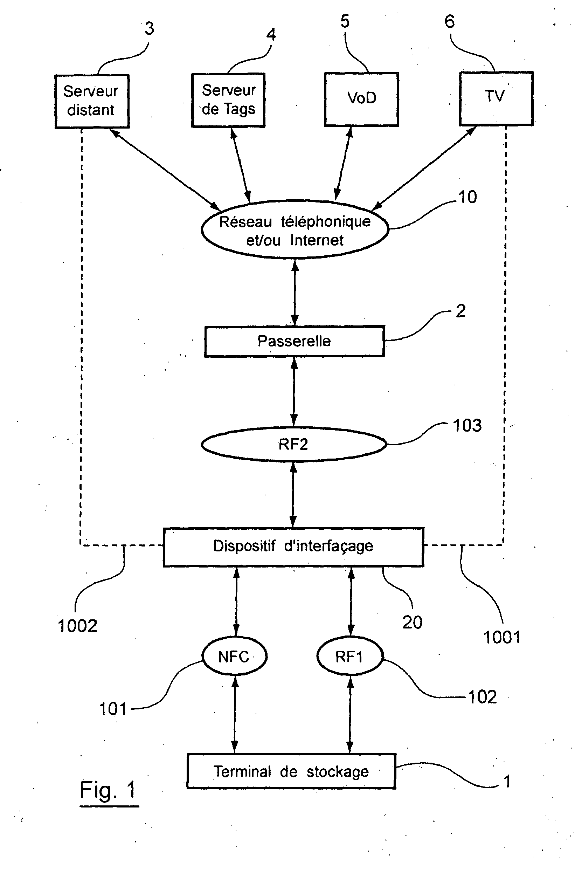

On représente ci-après, en relation avec la figure 1, un exemple de mise en oeuvre de l'invention dans un contexte de diffusion audiovisuelle domestique.

Sur toutes les figures du présent document, les éléments identiques sont désignés par une même référence numérique.

Comme illustré, le dispositif d'interfaçage 20 selon l'invention peut communiquer sous trois formes différentes, à savoir :
- via une transmission en champ proche NFC 101 avec un terminal de stockage 1 tel que décrit par exemple dans la demande de brevet FR-804751 ;
- via un premier type de transmission radiofréquence RF1 102 avec le terminal de stockage 1, par exemple selon le protocole Zigbee® ;
- via un second type de transmission radiofréquence RF2 103 communiquant via une passerelle de connexion 2 à un réseau téléphonique et/ou Internet 10 auquel est connecté un ensemble de dispositifs distants, par exemple selon le protocole Wifi.

Selon un autre mode de réalisation particulier, un protocole unique peut être utilisé pour communiquer en radiofréquence, d'une part avec les terminaux et d'autres part avec la passerelle.

La passerelle 2 peut par exemple être un appareil électronique fourni par un fournisseur d'accès à Internet à ses abonnés ADSL. Une telle passerelle, communément appelée « Box », et connectée au réseau de transmission radiofréquence RF2 103 permet au dispositif d'interfaçage de rentrer en communication et d'échanger des données avec de multiples dispositifs distants ou locaux. Dans un contexte de diffusion audiovisuelle domestique, ces dispositifs peuvent par exemple être un serveur de données distant 3, un site Internet (non représenté), un serveur de vidéo à la demande 5 (« VoD »), un téléviseur 6, un serveur de « tags » .

Un tag peut par exemple être une information commerciale, qui peut-être adaptée au profil de l'utilisateur de la passerelle de connexion, ou une information quant à l'âge requis pour visionner un film...

Les dispositifs précédemment cités peuvent également communiquer entre eux.

Selon une variante de ce mode de réalisation, le dispositif d'interfaçage de l'invention peut directement communiquer avec l'un des dispositifs, selon par exemple une liaison 1002 avec un serveur distant ou une liaison 1001 avec une télévision. Dans le cas de la liaison 1002, il peut par exemple s'agir d'un câble USB, le dispositif d'interfaçage comprenant alors une prise USB. Dans le cas de la liaison 1001, ladite liaison peut être un câble Péritel, le dispositif d'interfaçage comprenant le cas échéant une prise Péritel.

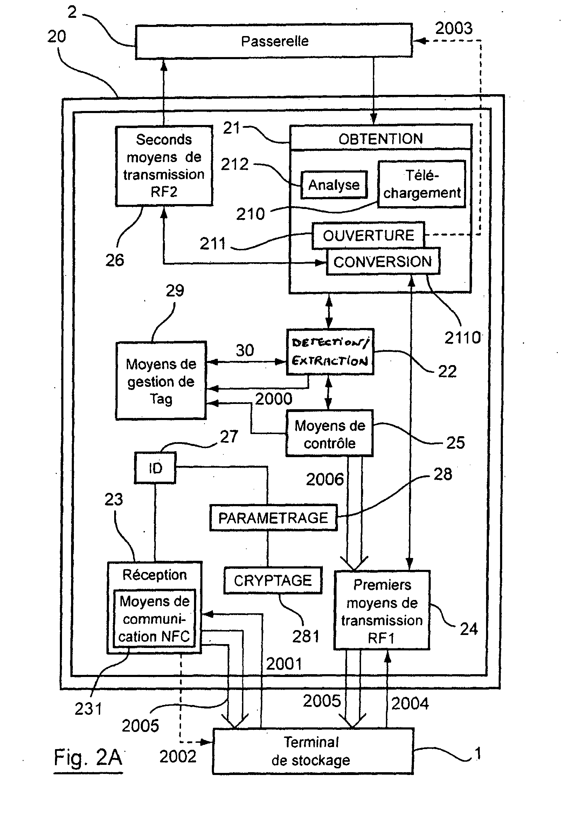

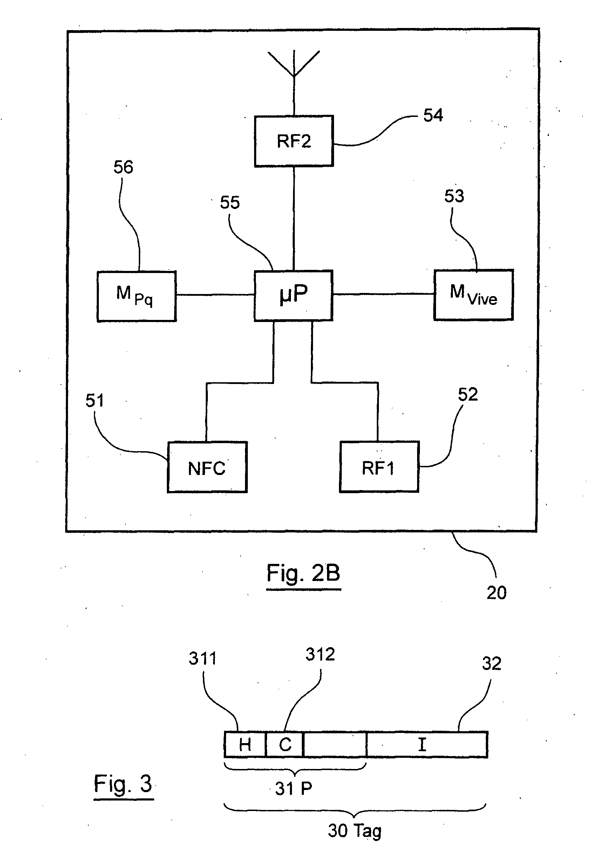

Les figures 2A et 2B illustrent la structure et la hiérarchisation des moyens d'un dispositif d'interfaçage 20 selon un mode de réalisation de l'invention.

Selon la figure 2A, le dispositif d'interfaçage, se trouvant dans une pièce, obtient via la passerelle de connexion 2 un flux de données. Pour ce faire, le dispositif 20 peut mettre en oeuvre des moyens de téléchargement 210 de ces données fournies par un serveur distant (non représenté sur la figure 2A) et transitant sur la passerelle de connexion.

Ces données sont ensuite analysées par des moyens d'analyse de flux de données 212, puis traitées par des moyens de détection et/ou d'extraction 22 afin de détecter et d'obtenir des tags, soit par extraction de tags présents dans le flux, soit par extraction d'informations permettant de télécharger des tags, ces tags étant destinés à être transmis à au moins un terminal de stockage à proximité via des premiers moyens de transmission RF1 24.

Ces tags vont être ensuite traitées et stockées par des moyens de gestion et/ou de stockage de tags 29.

En effet, il se peut qu'aucun terminal ne soit présent au moment de l'obtention des tags, ce qui entraîne le cas échéant le stockage desdits tags.

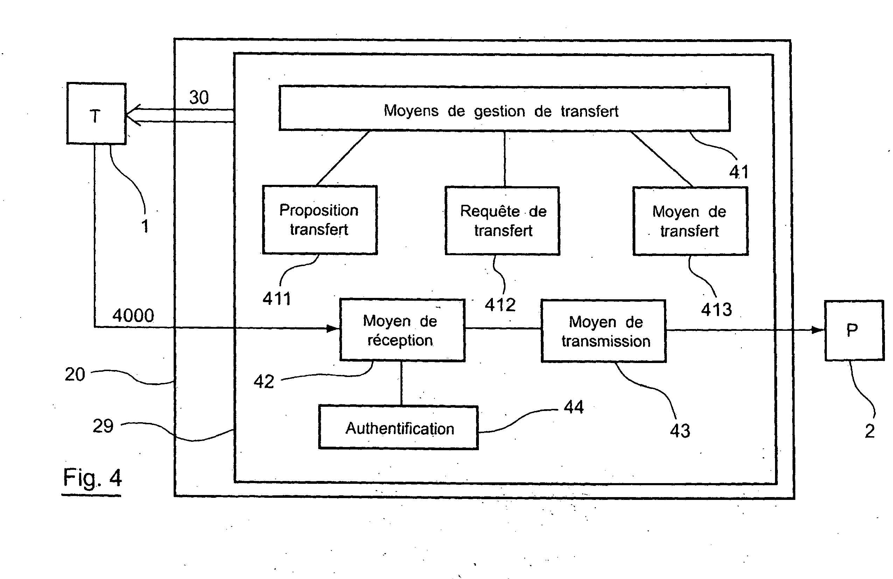

La gestion et/ou stockage desdits tags comprend un envoi des tags extraits, directement ou indirectement, et/ou d'informations de configuration 2000 par les moyens de détection et/ou d'extraction 22 aux moyens de gestion de tags 29 dont le fonctionnement sera expliqué en détail figure 4.

Selon une autre variante, les informations de configuration peuvent également être fournies par des terminaux.

La gestion et/ou stockage des tags peut également comprendre, dans le cas d'un tag téléchargé à partir d'une information extraite du flux, l'envoi aux moyens de gestion de tags 29 d'au moins une partie de l'information extraite, ayant permis le téléchargement du tag, comme au moins une information de synchronisation définissant un instant de début et/ou un instant de fin de validité, une durée de validité, et/ou une synchronisation avec le tag téléchargé.

Dans ce cas, le téléchargement du tag peut être contrôlé par des moyens de contrôle, en fonction de l'information de synchronisation.

La mise à disposition 2005 et/ou de la transmission desdits tags par les premiers moyens de transmission RF1 24 et/ou les moyens de communication NFC 231 est par la suite contrôlée 2006 par des moyens de contrôle 25, en fonctions desdites informations de synchronisation. Selon les modes de réalisation, il peut s'agir de moyens de contrôle indépendants des moyens de contrôle du téléchargement des tags, ou, comme illustré par la figure 2A, des mêmes moyens de contrôle.

Si un utilisateur porteur de terminal de stockage entre dans la pièce, il peut, par exemple par l'appui sur une touche lançant les opérations de transmission d'un identifiant (au préalable, le terminal a pu, le cas échéant, identifier l'utilisateur, par exemple à l'aide de moyens de reconnaissance biométrique), s'identifier auprès du dispositif 20, en émettant alors une requête 2001 de transmission d'au moins un tag.

Cette requête est transmise en NFC. Le terminal doit donc être placé à proximité du dispositif (quelques centimètres - cette courte distance permet de sécuriser la transmission).

Le dispositif réceptionne cette requête grâce à des moyens de réception 23 mettant en oeuvre des moyens de communication en champ proche 231.

La requête est ensuite identifiée et authentifiée par des moyens 27 d'identification et/ou d'authentification. On peut par exemple savoir si le terminal est autorisé ou non à communiquer avec le dispositif d'interfaçage, ou encore on peut savoir l'âge de l'utilisateur du terminal de stockage...

Le dispositif peut envoyer en retour un signal d'accusé de réception, confirmant que la requête a été prise en compte. Dans certains modes de réalisation, on peut prévoir que cette identification soit requise périodiquement (par exemple toutes les heures) et/ou lorsqu'un laps de temps prédéterminé sans activité s'est écoulé.

Le degré d'authentification et d'identification des données échangées avec le terminal de stockage peut-être paramétré par des moyens de paramétrage 28, et ces données peuvent le cas échéant être codées et/ou cryptées, selon le niveau de sécurisation requis par l'utilisateur et/ou en fonction du type de données échangées, par des moyens de codage et/ou de cryptage 281.

Selon une variante, le dispositif d'interfaçage peut également émettre une requête d'identification 2002 visant à être identifié et autorisé à communiquer par le terminal.

Selon le mode de réalisation ici représenté les moyens de contrôle décident de la mise à disposition des données dédiées selon les informations de synchronisation et/ou l'authentification du terminal.

En effet, selon le moment d'arrivée du terminal, la validité des tags et/ou des données dédiées peut être écoulée.

Par ailleurs, il se peut que les seules données dédiées disponibles soient par exemple adressées à un public adulte ayant plus de 18 ans, par exemple dans le cadre de tags insérés au cours d'un débat politique portant sur un référendum. Dans ce cas, si le porteur du terminal de stockage est d'un âge inférieur au programme politique diffusé, celui-ci se verra interdire par les moyens de contrôle 25 l'accès à de tels tags.

Il peut également s'agir d'une restriction de transmission d'un tag liée à la souscription d'un abonnement, par exemple d'un abonnement à un bouquet de chaînes de télévision.

Selon une variante, non représentée, les moyens de contrôle peuvent également « vider » les tags stockés dont la validité est arrivée à terme.

En outre, le dispositif d'interfaçage peut comprendre également des moyens d'ouverture 211 (compris dans les moyens d'obtention 21) qui permettent de requérir 2003 la mise en oeuvre d'un canal de transmission de données entre un terminal et au moins un serveur distant via ladite passerelle de connexion 2.

Par ailleurs, le terminal de stockage 1 peut également, après authentification, transférer par liaison RF via les premiers moyens de transmission RF1 24, des données 2004 qui peuvent être converties par des moyens de conversion 2110 mis en oeuvre par les moyens d'ouverture 211, et transmises à un serveur distant par des seconds moyens de transmission RF2.

En pratique, la plupart des éléments décrits précédemment peuvent être regroupés et organisés sous la forme illustrée par la figure 2B.

Sur cette figure, le dispositif d'interfaçage décrit en détail ci-dessous apparaît sous la forme :
- d'une interface NFC 51, contenant l'ensemble des éléments agissant sur les données dédiées transitant par le réseau NFC ;
- d'une interface RF1 52, contenant l'ensemble des éléments agissant les données dédiées transitant par le réseau RF1 ;
- d'une interface RF2 54, contenant l'ensemble des éléments agissant les données dédiées transitant par le réseau RF2 ;
- d'un microprocesseur 55 ;
- d'une mémoire vive 53 (et/ou d'un autre moyen de stockage de données) destinées essentiellement au stockage de données dédiées ;
- d'une mémoire de programmes 56 (qui peut être la même mémoire que la mémoire 53 dans certains modes de réalisation).

Le microprocesseur 55 contrôle les différents autres éléments, et assure, en fonction du ou des programmes, les fonctions détaillées plus haut.

La figure 3 représente les éléments constitutifs d'un exemple de tag 30. Un tag 30 est en effet constitué de données de paramétrage 31 et des données informatives 32. Par ailleurs, les données de paramétrage peuvent notamment comprendre :
- des données d'horodatage 311 définissant un instant de début et/ou un instant de fin de validité et/ou une durée de validité. Les moyens de gestion de tags 29 peuvent contrôler le stockage et/ou le transfert desdits tags vers au moins un terminal en fonction desdites données d'horodatage ;
- des données de caractérisation 312 desdites données informatives 32, de manière à ce que lesdits moyens de gestion de tags 29 contrôlent le stockage et/ou le transfert desdits tags vers au moins un terminal en fonction d'une comparaison entre ces données de caractérisation 312 et des informations de configuration 2000 stockées dans les moyens de traitement et/ou de stockage 22 selon le mode de réalisation.

La figure 4 illustre une structure détaillée des moyens de gestion de tags 29, selon un mode de réalisation.

Les moyens de gestion de tags 29, comprennent en effet des moyens de gestion de transfert 41 qui, en fonction des données d'horodatage 311 et de la comparaison entre les données de caractérisation 312 et les informations de configuration 2000, contrôle le transfert d'un tag à un terminal. Pour ce faire, ces moyens de transfert 41 peuvent mettre en oeuvre :
- des moyens de proposition de transfert 411 au terminal 1 d'au moins un tag, l'utilisateur du terminal pouvant alors choisir le tag qu'il souhaite recevoir ;
- des moyens de requête de transfert du tag sélectionné par l'utilisateur 412 ;
- des moyens de transfert de tags 413 ;
- des moyens de réception 42 d'une réponse 4000 à un tag ;
- des moyens de transmission de ladite réponse à un serveur distant via la passerelle de connexion 2.

Selon un mode de réalisation de l'invention, les moyens de réception 42 d'une réponse 4000 à un tag mettent également en oeuvre des moyens de certification et/ou d'authentification 44. Par exemple dans le cas d'un suivi de référendum, l'utilisateur, dont l'âge aura été authentifié, peut choisir de répondre à un tag représentatif d'une question débattue en direct, puis sa réponse, validée et authentifiée peut être réémise via le dispositif d'interfaçage vers un serveur distant qui peut effectuer des statistiques en quasi-direct.

### 6. exemples d'application

L'approche de l'invention permet par exemple d'acquérir, en temps réel ou presque, une réaction des personnes recevant des informations diffusées, par exemple un débat politique, un concours de chant, une émission de jeu télévisé,...

Ceci peut notamment permettre un suivi optimisé de tendances, tenant compte d'une évolution dans le temps. Un serveur, accessible par exemple par Internet, peut restituer ces tendances, par exemple sous la forme et la présentation usuellement utilisée pour les cours de bourse. Dans ce cas, en temps réel, on est informé de la côte d'une personne, d'un produit ou d'une idée, et des adaptations ou des analyses immédiates peuvent en être déduites.

Le dispositif d'interfaçage de l'invention est particulièrement adapté à de telles applications, puisqu'il est apte à recevoir un vote ou une opinion fourni par un terminal, et à la transmettre vers le serveur distant assurant la compilation, l'analyse et la restitution. Il peut notamment associer à ce vote au moins une des informations suivantes :
- une information d'horodatage (absolue ou relative par rapport au signal diffusé) ;
- une information d'identification (par exemple pour éviter les votes multiples d'un même utilisateur, ou au contraire récompenser les utilisateurs votant plusieurs fois, ou pour affiner le suivi des tendances) ;
- une information de profil de l'utilisateur (sexe, âge, profession,...).

Ces deux dernières informations notamment ont été fournies au dispositif d'interfaçage par un terminal, de préférence via la liaison NFC, au moins pour l'information d'identification. Il est à noter que plusieurs terminaux peuvent être associés au même dispositif d'interfaçage (par exemple un pour chaque membre d'une famille), et que le dispositif d'interfaçage peut en conséquence transmettre plusieurs votes distincts.

Ces informations peuvent bien sûr être cryptées, si besoin.

Selon les applications, les votes peuvent être effectués à tout moment, ce qui permet à l'utilisateur de réagir immédiatement à une situation, ou d'être sollicité, par exemple en temps réel. Dans ce dernier cas, le dispositif d'interfaçage peut recevoir un tag de sollicitation («répondez à la question suivante : ... »), prévoyant le cas échéant une période pour répondre. Les informations transmises en même temps que le vote pourront alors comprendre également un identifiant du tag.

Dans le cas de concours, ou de paris, ou de jeux, une information de retour («perdu », « gagné », « votre gain est... ») peut être transmise en retour. Dans un mode de réalisation particulier, il peut s'agir de tags, offrant des informations commerciales (coupons de réduction, offres adaptées à un utilisateur, en fonction de ses réponses et le cas échéant de son profil,...).

Plus généralement, cette fourniture d'informations commerciales peut être notamment fonction d'un profil, ou d'une configuration. Par exemple, les tags destinés à des enfants seront adaptés en conséquence, et le cas échéant soumis à un contrôle. Ainsi, le transfert d'un tag à un enfant peut être soumis à une autorisation de transfert fournie par l'un des parents. Le dispositif d'interfaçage se charge des échanges de données nécessaires pour cette opération.

De façon plus générale, le dispositif d'interfaçage peut permettre un contrôle parental (ou autre), en autorisant l'accès à certaines applications, certains sites, certains films, certains types de tags,... et/ou en contrôlant des temps d'utilisation.

Un suivi de tags peut être associé à un signal diffusé, par exemple un film téléchargé en VOD. Par exemple, lorsque le héros du film monte dans son véhicule, un tag proposant l'essai de ce véhicule peut être transmis. Dans ce cas, une synchronisation entre la diffusion, ou la lecture du film, est prévue. De nombreux modes de réalisation sont envisageables :
- les tags sont insérés dans le signal du film téléchargé, et lus au moment adéquat par ledit dispositif ;
- les tags sont fournis par un serveur distinct et distant, sous la forme d'un ou plusieurs lots associés au film, et téléchargeables par le biais d'au moins une information contenue dans le signal du film téléchargé, puis proposés au terminal, par le dispositif d'interfaçage, aux moments voulus :
   - en fonction d'instants prédéfinis par rapport au début du film ;
   - en fonction des informations contenues dans le signal du film :
      - code spécifique inscrit dans le signal ;
      - donnée de synchronisation (« timecode ») contenue dans le signal ;
      - portion du signal (par exemple début d'une image) ;
      - ...

Les modes de réalisation où les tags sont fournis par un serveur de tags distinct permettent ainsi de pouvoir gérer et modifier le lot de tags associé à un signal multimédia.

Les tags proposés peuvent par exemple être fonction de la chaîne de télévision ou du mode de diffusion d'un film ou d'un reportage.

Par exemple, un tag publicitaire poussant les utilisateurs à s'abonner à une chaîne cryptée de télévision ou à souscrire à des services complémentaires peut être proposé lors de la diffusion d'un film (« en clair » par exemple) par la chaîne.

Ce tag ne sera par contre par proposé lors d'une diffusion du film par une autre chaîne.

Les tags proposés peuvent également être fonction de l'abonnement de l'utilisateur à certains services spécifiques offerts par le biais de tag. Ainsi, un utilisateur ayant souscrit un abonnement à un service spécifique peut recevoir par tag une proposition d'informations complémentaires sur l'émission ou le film qu'il visionne (par exemple un résumé, une liste d'ouvrages ou de sites internet associé...).

Des tags différents peuvent également être obtenus en fonction du moment de diffusion du film. Par exemple, les lots de tags téléchargeables au moment de l'été mettront davantage l'accent sur des propositions de services liés aux loisirs ou aux voyages et ceux téléchargeables au moment de Nöel, sur les cadeaux ou la bonne chère...

Le choix peut encore tenir compte d'informations présentes sur le terminal et/ou le dispositif d'interfaçage, caractérisant l'utilisateur (âge, sexe, métier, préférences, centres d'intérêt, précédents tags téléchargés,...).

Une autre application de l'invention est celle de la diffusion de messages publicitaires. A une publicité peut être associée un tag, donnant plus d'informations et le cas échéant un avantage commercial (remise, option gratuite, invitation,...). En outré, la gestion d'une campagne publicitaire peut être adaptée, en utilisant un mécanisme similaire à celui proposé plus haut pour le vote.

De nombreuses applications peuvent encore être envisagées, telles que les jeux en ligne ou en réseau, le dispositif d'interfaçage gérant les échanges avec un ou plusieurs terminaux et/ou un site distant.

Une autre application est la liaison avec d'autres appareils, par exemple dans le cadre d'applications domotiques. Le dispositif d'interfaçage peut alors assurer le lien entre des moyens de chauffage, de climatisation, d'audio-vidéo,... et un ou plusieurs terminaux, assurant le rôle de télécommande (et recevant le cas échéant des informations d'état des différents appareils). Le dispositif d'interfaçage permet de centraliser des commandes reçues de terminaux multiples, et si nécessaire de gérer des arbitrages, des temporisations ou des priorités (par exemple pour privilégier le terminal d'un parent par rapport au terminal d'un enfant).

Le dispositif d'interfaçage peut également fournir aux terminaux des applications (« applets » par exemple), de façon définitive ou temporaire, pour leur attribuer une fonction supplémentaire (clavier par exemple). Il peut également autoriser l'utilisateur d'un dispositif (clavier indépendant par exemple), le cas échéant sous réserve que le terminal soit à proximité de ce dispositif (la proximité étant contrôlée par les moyens NFC).

Selon les cas, le dispositif d'interfaçage peut jouer un rôle de serveur et de supervision. Par exemple, il peut stocker une série de tags, et les tenir à disposition des terminaux, de façon que ceux-ci les chargent uniquement en cas de besoin. Régulièrement, un terminal peut interroger le dispositif d'interfaçage, pour obtenir une liste de tags disponibles (puis télécharger, effacer, ou encore transférer des tags).

Le dispositif d'interfaçage peut tenir compte de données de synchronisation, pour gérer des péremptions, modifier l'ordre de proposition,... Il gère également l'effacement des tags (certains sont téléchargeables une seule fois, d'autres plusieurs fois, avec ou sans limitation), les doublons éventuels (soit en supprimant le doublon, soit en les « additionnant », s'il s'agit d'une offre commerciale et que cette possibilité est prévue). En fonction d'un profil utilisateur, le dispositif d'interfaçage peut également interroger de lui-même des serveurs distants, pour proposer à chaque terminal des tags susceptibles de l'intéresser (le profil étant fourni par l'utilisateur, et le cas échéant mis à jour par le dispositif d'interfaçage en fonction d'une analyse des demandes préalables reçues de l'utilisateur).

Selon encore une autre caractéristique, le terminal d'interfaçage peut assurer une fonction de sauvegarde de tout ou partie des données présentes dans un terminal, le cas échéant sous une forme cryptée.

## Revendications

1. Dispositif d'interfaçage (20) sécurisé, permettant le stockage d'au moins une séquence de données dédiées, dite tag (30), et/ou son transfert à au moins un terminal de stockage (1) et de transmission de données,
ledit tag comprenant d'une part des données de paramétrage (31) et d'autre part des données informatives (32),
le dispositif comprenant :
- des moyens d'obtention (21) d'au moins un flux de données multimédia diffusées via un ou plusieurs supports de transmission ;
- des moyens de détection et d'extraction d'au moins un desdits tags (30) et/ou d'au moins une information permettant de télécharger au moins un tag (30), dans ledit flux de données ;
- des moyens de gestion et/ou de stockage (29) du ou desdits tags ;
- des moyens d'identification et/ou d'authentification (27) d'un desdits terminaux (1), mettant en oeuvre des moyens de communication en champ proche (231) ;
- des moyens de réception (23) d'une requête (2001) de transmission d'au moins un tag, émise par un desdits terminaux ;
- des premiers moyens de transmission radiofréquence (24) dudit au moins un tag vers ledit terminal (1).

2. Dispositif d'interfaçage selon la revendication 1, **caractérisé en ce que** lesdits moyens d'obtention comprennent des moyens de téléchargement (210) dudit flux de données, depuis au moins un serveur distant (3).

3. Dispositif d'interfaçage selon la revendication 1, **caractérisé en ce que** ledit flux de données est un signal diffusé.

4. Dispositif d'interfaçage selon l'une quelconque des revendications 1 à 3, **caractérisé en ce que** lesdites données de paramétrage (31) comprennent des données d'horodatage (311), définissant un instant de début et/ou un instant de fin de validité et/ou une durée de validité, et **en ce que** lesdits moyens de gestion et/ou de stockage de tags (29) contrôlent le stockage et/ou le transfert desdits tags vers au moins un terminal en fonction desdites données d'horodatage (311).

5. Dispositif d'interfaçage selon l'une quelconque des revendications 1 à 4, **caractérisé en ce que** lesdites données de paramétrage (31) comprennent des données de caractérisation (312) desdites données informatives,
et **en ce que** lesdits moyens de gestion et/ou de stockage de tags contrôlent le stockage et/ou le transfert desdits tags vers au moins un terminal en fonction d'une comparaison entre lesdites données de caractérisation et des informations de configuration (2000) stockées dans ledit dispositif d'interfaçage et/ou fournies par un desdits terminaux.

6. Dispositif d'interfaçage selon l'une quelconque des revendications 1 à 5, **caractérisé en ce qu'**il comprend des moyens de gestion de transfert (41) d'au moins un tag vers un terminal, comprenant des moyens de proposition de transfert d'au moins un tag (411), des moyens de requête de transfert d'au moins un tag (412) et des moyens de transfert dudit tag (413).

7. Dispositif d'interfaçage selon l'une quelconque des revendications 1 à 6, **caractérisé en ce qu'**il comprend des moyens de réception d'une réponse à un tag (42), transmise par un desdits terminaux, et des moyens de transmission (43) de ladite réponse vers un serveur distant (3).

8. Dispositif d'interfaçage selon la revendication 7, **caractérisé en ce qu'**il comprend des moyens de certification et/ou d'authentification (44) de ladite réponse, en fonction d'au moins une information de certification et/ou d'authentification transmise par ladite requête de transmission.

9. Dispositif d'interfaçage selon l'une des revendications 1 à 8, **caractérisé en ce que** ladite information permettant le téléchargement dudit tag comprend au moins une information de synchronisation définissant un instant de début et/ou un instant de fin de validité, une durée de validité et/ou une donnée de synchronisation avec ledit tag à télécharger,
et **en ce qu'**il comprend des moyens de contrôle (25) du téléchargement dudit tag, en fonction de la ou desdites informations de synchronisation.

10. Dispositif d'interfaçage selon l'une quelconque des revendications 1 à 9, **caractérisé en ce qu'**il comprend des seconds moyens de transmission radiofréquence (26) avec une passerelle de connexion (2) à un réseau téléphonique et/ou Internet (10).

11. Dispositif d'interfaçage selon l'une quelconque des revendications 1 à 10, **caractérisé en ce que** lesdits moyens d'identification et/ou d'authentification (27) d'un terminal, tiennent compte d'informations d'identification et/ou d'authentification transmises dans ladite requête émise par le terminal.

12. Dispositif d'interfaçage selon l'une quelconque des revendications 1 à 11, **caractérisé en ce qu'**il comprend des moyens de paramétrage (28), de codage et/ou de cryptage (281) en fonction de données de paramétrage, de codage et/ou de cryptage échangées via lesdits moyens de communication en champ proche.

13. Dispositif d'interfaçage selon l'une quelconque des revendications 1 à 12, **caractérisé en ce que** lesdits moyens d'obtention comprennent des moyens d'ouverture (211) et de mise en oeuvre d'un canal de transmission de données entre un terminal et au moins un serveur distant, via ladite passerelle de connexion.

14. Dispositif d'interfaçage selon la revendication 13, **caractérisé en ce que** les moyens d'ouverture (211) et de mise en oeuvre d'un canal de transmission de données comprennent des moyens de conversion (2110) de signaux entre lesdits premiers moyens de transmission radiofréquence et les seconds moyens de transmission radiofréquence.

15. Dispositif d'interfaçage selon l'une quelconque des revendications 1 à 14, **caractérisé en ce que** lesdits premiers moyens de transmission radiofréquence et/ou lesdits seconds moyens de transmission radiofréquence appartiennent au groupe comprenant des moyens de communication mettant en oeuvre un protocole de type ZigBee, Bluetooth, 6LoWPAN, Ethernet ou Wifi.

16. Procédé d'interfaçage sécurisé, permettant le stockage d'au moins une séquence de données dédiées, dite tag (30), et/ou son transfert à au moins un terminal de stockage (1) et de transmission de données,
ledit tag comprenant d'une part des données de paramétrage (31) et d'autre part des données informatives (32),
le procédé comprenant les étapes suivantes :
- obtention d'au moins un flux de données multimédia diffusées via un ou plusieurs supports de transmission ;
- détection et d'extraction d'au moins un desdits tags et/ou d'au moins une information permettant de télécharger au moins un tag, dans ledit flux de données ;
- gestion et/ou de stockage du ou desdits tags ;
- identification et/ou d'authentification (27) d'un desdits terminaux (1), mettant en oeuvre des moyens de communication en champ proche (231) ;
- réception (23) d'une requête (2001) de transmission d'au moins un tag, émise par un desdits terminaux ;
- transmission radiofréquence (24) dudit au moins un tag vers ledit terminal (1).

## Patentansprüche

1. Gesichertes Schnittstellensystem (20), welches die Speicherung von mindestens einer Sequenz spezifischer Daten, eines sogenannten Tags (30), und/oder deren Übermittlung auf mindestens ein Endgerät zur Speicherung (1) und Übertragung von Daten ermöglicht,
wobei genannter Tag zum einen Parametrierungsdaten (31) und zum anderen Informationsdaten (32) umfasst,
wobei das System Folgendes umfasst:
- Vorrichtung zur Erzielung (21) mindestens eines Stroms von Mul-timediadaten, die über ein oder mehrere Übertragungsmedien diffundiert werden;
- Vorrichtung zur Ermittlung und zum Auslesen im genannten Datenstrom mindestens eines der genannten Tags (30) und/oder mindestens einer Information, wobei das Herunterladen mindestens eines Tags (30) ermöglicht wird;
- Vorrichtung zur Verwaltung und/oder Speicherung (29) des oder der genannten Tags;
- Vorrichtung zur Identifizierung und/oder Authentifizierung (27) eines der genannten Endgeräte (1), wobei Kommunikationsmittel im Nahbereich eingesetzt werden (Near Field Communication) (231);
- Vorrichtung zum Empfang (23) einer Anfrage (2001) für die Übertragung mindestens eines Tags, welche von einem der genannten Endgeräte aus gesendet wird;
- eine erste Vorrichtung zur Funkfrequenzübertragung (24) mindestens eines der genannten Tags zu genanntem Endgerät (1).

2. Schnittstellensystem nach Anspruch 1, **dadurch gekennzeichnet, dass** genannte Erzielungsvorrichtung eine Vorrichtung zum Herunterladen (210) des genannten Datenstroms von mindestens einem Remote Server (3) umfasst.

3. Schnittstellensystem nach Anspruch 1, **dadurch gekennzeichnet, dass** genannter Datenstrom ein diffundiertes Signal ist.

4. Schnittstellensystem nach einem der Ansprüche 1 bis 3, **dadurch gekennzeichnet, dass** genannte Parametrierungsdaten (31) Zeitstempeldaten (311) umfassen, die einen Zeitpunkt des Beginns und/oder einen Zeitpunkt des Ablaufs der Gültigkeit und/oder eine Gültigkeitsdauer definieren, und dadurch, dass die Vorrichtung zur Verwaltung und/oder Speicherung von Tags (29) die Speicherung und/oder die Übermittlung genannter Tags zu mindestens einem Endgerät in Abhängigkeit von genannten Zeitstempeldaten (311) kontrolliert.

5. Schnittstellensystem nach einem der Ansprüche 1 bis 4, **dadurch gekennzeichnet, dass** genannte Parametrierungsdaten (31) Daten zur Charakterisierung (312) genannter Informationsdaten umfassen,
und dadurch dass genannte Vorrichtung zur Verwaltung und/oder Speicherung von Tags die Speicherung und/oder Übermittlung genannter Tags zu mindestens einem Endgerät in Abhängigkeit eines Vergleichs zwischen genannten Charakterisierungsdaten und den Konfigurierungsdaten (2000), die in genanntem Schnittstellensystem gespeichert sind und/oder von einem der genannten Endgeräte bereitgestellt werden, kontrolliert.

6. Schnittstellensystem nach einem der Ansprüche 1 bis 5, **dadurch gekennzeichnet, dass** es eine Vorrichtung zur Verwaltung der Übermittlung (41) von mindestens einem Tag zu einem Endgerät umfasst, welches eine Vorrichtung zum Vorschlagen der Übermittlung von mindestens einem Tag (411), eine Vorrichtung zur Anfrage der Übermittlung von mindestens einem Tag (412) und eine Vorrichtung zur Übermittlung des genannten Tags (413) umfasst.

7. Schnittstellensystem nach einem der Ansprüche 1 bis 6, **dadurch gekennzeichnet, dass** es eine Vorrichtung zum Empfang einer Antwort auf einen Tag (42), welche durch eines der genannten Endgeräte übertragen wird, und eine Vorrichtung zur Übertragung (43) genannter Antwort zu einem Remote Server (3) umfasst.

8. Schnittstellensystem nach Anspruch 7, **dadurch gekennzeichnet, dass** es eine Vorrichtung zur Bestätigung und/oder zur Authentifizierung (44) genannter Antwort in Abhängigkeit von mindestens einer Bestätigungs- und/oder Authentifizierungsinformation, die über genannte Übertragungsanfrage übertragen wird, umfasst.

9. Schnittstellensystem nach einem der Ansprüche 1 bis 8, **dadurch gekennzeichnet, dass** genannte Information, die das Herunterladen des genannten Tags ermöglicht, mindestens eine Synchronisierungsinformation umfasst, die einen Zeitpunkt des Beginns und/oder einen Zeitpunkt des Ablaufs der Gültigkeit, eine Gültigkeitsdauer und/oder eine Angabe zur Synchronisierung mit dem genannten herunterzuladenden Tag definiert,
und dadurch, dass es eine Kontrollvorrichtung (25) zum Herunterladen des genannten Tags in Abhängigkeit von der oder den genannten Synchronisierungsinformationen umfasst.

10. Schnittstellensystem nach einem der Ansprüche 1 bis 9, **dadurch gekennzeichnet, dass** es eine zweite Vorrichtung zur Funkfrequenzübertragung (26) mit einem Gateway (2) zu einem Telefonnetz und/oder Internet (10) umfasst.

11. Schnittstellensystem nach einem der Ansprüche 1 bis 10, **dadurch gekennzeichnet, dass** genannte Vorrichtung zur Identifizierung und/oder Authentifizierung (27) eines Endgeräts Identifizierungs- und/oder Authentifizierungsinformationen berücksichtigt, die in der genannten vom Endgerät gesendeten Anfrage übertragen werden.

12. Schnittstellensystem nach einem der Ansprüche 1 bis 11, **dadurch gekennzeichnet, dass** es eine Vorrichtung zur Parametrierung (28), Kodierung und/oder Verschlüsselung (281) in Abhängigkeit von den Parametrierungs-, Kodierungsund/oder Verschlüsselungsdaten, die über genannte Vorrichtung zur Kommunikation im Nahbereich ausgetauscht werden, umfasst.

13. Schnittstellensystem nach einem der Ansprüche 1 bis 12, **dadurch gekennzeichnet, dass** genannte Erzielungsvorrichtung eine Vorrichtung zur Öffnung (211) und Bereitstellung eines Datenübertragungskanals zwischen einem Endgerät und mindestens einem Remote Server über genanntes Gateway umfasst.

14. Schnittstellensystem nach Anspruch 13, **dadurch gekennzeichnet, dass** die Vorrichtung zur Öffnung (211) und Bereitstellung eines Datenübertragungskanals eine Vorrichtung zur Umwandlung (2110) von Signalen zwischen genannter erster Vorrichtung zur Funkfrequenzübertragung und der zweiten Vorrichtung zur Funkfrequenzübertragung umfasst.

15. Schnittstellensystem nach einem der Ansprüche 1 bis 14, **dadurch gekennzeichnet, dass** genannte erste Vorrichtung zur Funkfrequenzübertragung und/oder genannte zweite Vorrichtung zur Funkfrequenzübertragung zu der Gruppe gehören, die eine Kommunikationsvorrichtung umfassen, die ein Protokoll des Typs ZigBee, Bluetooth, 6LoWPAN, Ethernet oder WLAN bereitstellt.

16. Gesichertes Schnittstellenverfahren, welches die Speicherung mindestens einer spezifischen Datensequenz, des genannten Tags (30), und/oder deren Übermittlung zu mindestens einem Endgerät zur Speicherung (1) und Übertragung von Daten ermöglicht,
wobei genannter Tag zum einen Parametrierungsdaten (31) und zum anderen Informationsdaten (32) umfasst,
wobei das Verfahren die folgenden Verfahrensschritte umfasst:
- Erzielung mindestens eines Stroms von Multimediadaten, die über ein oder mehrere Übertragungsmedien diffundiert werden;
- Ermittlung und Auslesen im genannten Datenstrom mindestens eines der genannten Tags und/oder mindestens einer Information, wobei das Herunterladen mindestens eines Tags ermöglicht wird;
- Verwaltung und/oder Speicherung des oder der genannten Tags
- Identifizierung und/oder Authentifizierung (27) eines der genannten Endgeräte (1), wobei Kommunikationsmittel im Nahbereich eingesetzt werden (Near Field Communication) (231);
- Empfang (23) einer Anfrage (2001) für die Übertragung mindestens eines Tags, welche von einem der genannten Endgeräte aus gesendet wird;
- Funkfrequenzübertragung (24) mindestens eines der genannten Tags zu genanntem Endgerät(1).

## Claims

1. Secure-interfacing device (20) enabling the storage of at least one sequence of dedicated data, called a tag (30), and/or the transfer of said tag to at least one terminal (1) for storage and transmission of data,
said tag comprising, on the one hand, parametrisation data (31) and, on the other hand, informative data (32),
the device comprising:
- means for acquisition (21) of at least one stream of multimedia data which are propagated via one or more transmission media;
- means for detection and extraction in said data stream of at least one of said tags (30) and/or of at least one item of information enabling at least one tag (30) to be downloaded;
- means for management and/or storage (29) of said tag(s);
- means for identification and/or authentication (27) of one of said terminals (1), using means for near-field communication (231);
- means for reception (23) of a request (2001), emitted by one of said terminals, for transmission of at least one tag;
- first means for radiofrequency transmission (24) of said at least one tag to said terminal (1).

2. Interfacing device according to Claim 1, **characterised in that** said acquisition means include means for downloading (210) of said data stream from at least one remote server (3).

3. Interfacing device according to Claim 1, **characterised in that** said data stream is a propagated signal.

4. Interfacing device according to any one of Claims 1 to 3, **characterised in that** said parametrisation data (31) include time-stamp data (311) defining a validity start-time and/or a validity end-time and/or a period of validity, and **in that** said means for management and/or storage of tags (29) control the storage and/or the transfer of said tags to at least one terminal as a function of said time-stamp data (311).

5. Interfacing device according to any one of Claims 1 to 4, **characterised in that** said parametrisation data (31) include data (312) for characterising said informative data,
and **in that** said means for management and/or storage of tags control the storage and/or the transfer of said tags to at least one terminal as a function of a comparison between said characterisation data and configuration information (2000) stored in said interfacing device and/or provided by one of said terminals.

6. Interfacing device according to any one of Claims 1 to 5, **characterised in that** it includes means for managing transfer (41) of at least one tag to a terminal, including means for proposing transfer of at least one tag (411), means for requesting transfer of at least one tag (412), and means for transfer of said tag (413).

7. Interfacing device according to any one of Claims 1 to 6, **characterised in that** it includes means for receiving a response to a tag (42), transmitted by one of said terminals, and means for transmission (43) of said response to a remote server (3).

8. Interfacing device according to Claim 7, **characterised in that** it includes means for certification and/or authentication (44) of said response as a function of at least one item of certification and/or authentication information transmitted by said transmission request.

9. Interfacing device according to one of Claims 1 to 8, **characterised in that** said item of information enabling the downloading of said tag includes at least one item of synchronisation information defining a validity start-time and/or a validity end-time, a period of validity and/or a datum for synchronisation with said tag to be downloaded, and **in that** it includes means for control (25) of the downloading of said tag as a function of said item(s) of synchronisation information.

10. Interfacing device according to any one of Claims 1 to 9, **characterised in that** it includes second means for radiofrequency transmission (26), with a gateway for connection (2) to a telephone network (10) and/or Internet network (10).

11. Interfacing device according to any one of Claims 1 to 10, **characterised in that** said means for identification and/or authentication (27) of a terminal take account of information for identification and/or authentication transmitted in said request emitted by the terminal.

12. Interfacing device according to any one of Claims 1 to 11, **characterised in that** it includes means for parametrisation (28), for encoding and/or for encryption (281) as a function of data for parametrisation, for encoding and/or for encryption which are exchanged via said means for near-field communication.

13. Interfacing device according to any one of Claims 1 to 12, **characterised in that** said acquisition means include means for opening (211) and for using a channel for transmission of data between a terminal and at least one remote server via said connection gateway.

14. Interfacing device according to Claim 13, **characterised in that** the means for opening (211) and for using a channel for transmission of data include means for conversion (2110) of signals between said first means for radiofrequency transmission and the second means for radiofrequency transmission.

15. Interfacing device according to any one of Claims 1 to 14, **characterised in that** said first means for radiofrequency transmission and/or said second means for radiofrequency transmission pertain to the group comprising communication means using a protocol of type ZigBee, Bluetooth, 6LoWPAN, Ethernet or Wi-Fi.

16. Secure-interfacing process enabling the storage of at least one sequence of dedicated data, called a tag (30), and/or the transfer of said tag to at least one terminal (1) for storage and for transmission of data,
said tag comprising, on the one hand, parametrisation data (31) and, on the other hand, informative data (32),
the process comprising the following steps:
- acquisition of at least one stream of multimedia data which are propagated via one or more transmission media;
- detection and extraction in said data stream of at least one of said tags and/or of at least one item of information enabling at least one tag to be downloaded;
- management and/or storage of said tag(s);
- identification and/or authentication (27) of one of said terminals (1), using means for near-field communication (231);
- reception (23) of a request (2001) for transmission of at least one tag, emitted by one of said terminals;
- radiofrequency transmission (24) of said at least one tag to said terminal (1).
